# EUROPEAN PATENT APPLICATION

(11) **EP 4 769 823 A1**
(43) Date of publication of application: **01.07.2026**
(21) Application number: 24887410.9
(22) Date of filing: 24.06.2024
(51) Int. Cl.: H01M 50/593

(54) **BATTERY CELL, BATTERY, AND ELECTRICAL DEVICE**

(30) Priority: 07.11.2023 CN 202311478239
(71) Applicant: Contemporary Amperex Technology Co., Limited, Ningde, Fujian 352100 (CN)
(72) Inventor: WANG, Liqin, Ningde, Fujian 352100 (CN); ZHOU, Wenlin, Ningde, Fujian 352100 (CN); ZHANG, Weihong, Ningde, Fujian 352100 (CN); CHENG, Qi, Ningde, Fujian 352100 (CN); LI, Quankun, Ningde, Fujian 352100 (CN)
(74) Representative: Kraus & Lederer PartGmbB
(86) International application number: PCT/CN2024/100965
(87) International publication number: WO 2025/097786

(57) **Abstract**

A battery cell (20), a battery (100) and an electrical device. The battery cell (20) comprises a casing (21), a first electrode terminal (22), an electrode assembly (23), a first insulating member (24) and a second insulating member (25). The casing comprises a first wall (211), and the first electrode terminal (22) is insulated from and arranged on the first wall (211); the electrode assembly (23) is arranged in the casing (21), the electrode assembly (23) comprising a main body part (231) and a first tab (232); the main body part (231) is flat, and the main body part (231) is provided with a first end surface (2311) facing the first wall (211); the first tab (232) is arranged on the first end surface (2311), and the first tab (232) is electrically connected to the first electrode terminal (22); the first insulating member (24) and the second insulating member (25) are arranged in the casing (21), and in the thickness direction of the main body part (231), the first tab (232) is located between the first insulating member (24) and the second insulating member (25).

## Description

### CROSS-REFERENCE TO RELATED APPLICATION

The present application claims priority to Chinese Patent Application No. CN202311478239.5 filed on November 7, 2023 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

In the manufacturing process of batteries, the reliability of the batteries is a problem that cannot be overlooked. Therefore, how to improve the reliability of batteries is an urgent technical problem to be solved in battery technologies.

### SUMMARY

The present application provides a battery cell, a battery, and an electric device, which can improve the reliability of the battery.

The present application is implemented through the following technical solutions.

In a first aspect, embodiments of the present application provide a battery cell. The battery cell includes a shell, a first electrode terminal, an electrode assembly, a first insulating member, and a second insulating member. The shell includes a first wall; the first electrode terminal is disposed on the first wall in an insulated manner; the electrode assembly is disposed in the shell, the electrode assembly includes a main body part and a first tab, the main body part is of a flat shape, the main body part has a first end surface facing the first wall, the first tab is disposed on the first end surface, and the first tab is electrically connected to the first electrode terminal; and the first insulating member and the second insulating member are disposed in the shell, and in a thickness direction of the main body part, the first tab is located between the first insulating member and the second insulating member.

According to the battery cell of the embodiments of the present application, by providing the first insulating member and the second insulating member in the shell, in the thickness direction of the main body part, the first tab is located between the first insulating member and the second insulating member, the orthographic projection of the first tab in the thickness direction of the main body part and the orthographic projection of the first insulating member in the thickness direction of the main body part at least partially overlap, and the orthographic projection of the first tab in the thickness direction of the main body part and the orthographic projection of the second insulating member in the thickness direction of the main body part at least partially overlap. The first insulating member and the second insulating member can insulate and isolate the first tab from the shell in the thickness direction of the main body part, thereby reducing the risk of a short circuit caused by contact between the first tab and the shell. As a result, the battery cell has relatively high reliability.

According to some embodiments of the present application, an orthographic projection of the first tab in the thickness direction of the main body part falls within an orthographic projection of the first insulating member in the thickness direction of the main body part, and the orthographic projection of the first tab in the thickness direction of the main body part falls within an orthographic projection of the second insulating member in the thickness direction the main body part.

In the above solution, the orthographic projection of the first tab in the thickness direction of the main body part falls within the orthographic projection of the first insulating member in the thickness direction of the main body part, such that the first insulating member and the first tab have a relatively large overlapping area. The orthographic projection of the first tab in the thickness direction of the main body part falls within the orthographic projection of the second insulating member in the thickness direction of the main body part, such that the second insulating member and the first tab have a relatively large overlapping area. As a result, the first insulating member and the second insulating member can effectively insulate and isolate the first tab from the shell.

According to some embodiments of the present application, the first insulating member is disposed between the first wall and the first end surface.

In the above solution, the first insulating member is disposed between the first wall and the first end surface. When viewed in the thickness direction of the first wall, the first insulating member and the first end surface have a relatively large overlapping area, and the first insulating member can position the electrode assembly.

According to some embodiments of the present application, the first insulating member is in contact with both the first wall and the first end surface.

In the above solution, the first insulating member is in contact with both the first wall and the first end surface, and the first insulating member can achieve positioning of the electrode assembly and restrict the movement of the electrode assembly toward the first wall.

According to some embodiments of the present application, the first insulating member includes a body and a protruding part, in the thickness direction of the main body part, the first tab is located between the body and the second insulating member, the body has a first surface facing the second insulating member, and the protruding part is connected to the body and protrudes from the first surface.

In the above solution, the protruding part protrudes from the first surface, and the dimension of the body in the thickness direction of the main body part may be relatively small, so as to reduce space occupation. Meanwhile, the strength of the body can be increased. When the first insulating member is in contact with both the first wall and the first end surface, the arrangement of the protruding part can increase the contact area between the first insulating member and the first wall and the first end surface, thereby providing a relatively good positioning effect on the electrode assembly.

According to some embodiments of the present application, the first tab is located at one end of the main body part in a length direction, the body extends in a width direction of the main body part, a plurality of the protruding parts are provided, the plurality of protruding parts are spaced apart from each other in the width direction of the main body part, and in the width direction of the main body part, the first tab is located between two adjacent protruding parts.

In the above solution, the first tab is located between two adjacent protruding parts, and can have a relatively large overlapping area with the first tab in the width direction of the main body part, so as to form insulating isolation for the first tab in the width direction of the main body part, thereby reducing the probability of contact between the first tab and the shell. A plurality of protruding parts are provided, which can increase the strength of the body; and when the first insulating member is configured to position the electrode assembly, the arrangement of a plurality of protruding parts can improve the positioning of the electrode assembly at multiple positions.

According to some embodiments of the present application, in the width direction of the main body part, an orthographic projection of the first tab falls within an orthographic projection of the protruding part.

In the above solution, since the orthographic projection of the first tab falls within the orthographic projection of the protruding part, in one aspect, the insulating effect of the protruding part on the first tab can be increased; in another aspect, the protruding part and the electrode assembly can have a relatively large overlapping area, thereby providing a relatively good positioning effect on the electrode assembly.

According to some embodiments of the present application, the body, the two adjacent protruding parts, and the second insulating member define an accommodating space for accommodating the first tab.

In the above solution, the first tab is accommodated in the accommodating space, which provides a relatively good insulating effect on the first tab, reducing the probability of contact between the first tab and the shell.

According to some embodiments of the present application, the electrode assembly further includes a second tab having a polarity opposite to that of the first tab, the second tab and the first tab are located at a same end of the main body part in the length direction, and in the width direction of the main body part, the second tab is located between two adjacent protruding parts.

In the above solution, the second tab and the first tab are located at the same end of the main body part in the length direction, facilitating the lead-out of electric energy of the electrode assembly, and facilitating the assembly of the electrode assembly and the shell. The second tab is located between two adjacent protruding parts, and the first insulating member has a relatively large dimension in the width direction of the main body part, thereby providing a relatively good positioning effect on the electrode assembly.

According to some embodiments of the present application, the plurality of protruding parts include a first protruding part, a second protruding part, and a third protruding part, in the width direction of the main body part, the first protruding part and the second protruding part are respectively located at two opposite ends of the body, the third protruding part is located between the first protruding part and the second protruding part, the first tab is located between the first protruding part and the third protruding part, and the second tab is located between the second protruding part and the third protruding part.

In the above solution, the first tab is located between the first protruding part and the third protruding part, and the second tab is located between the second protruding part and the third protruding part, such that the first tab and the second tab can be insulated and isolated in the width direction of the main body part, thereby reducing the probability of contact between the first tab and the shell as well as between the second tab and the shell. When the first insulating member is in contact with both the first wall and the first end surface, the first protruding part and the second protruding part are located at two ends of the body in the width direction of the main body part, and the third protruding part is located between the first protruding part and the second protruding part, thereby facilitating the stable positioning of the electrode assembly by the first insulating member, and restricting the movement of the electrode assembly toward the first wall.

According to some embodiments of the present application, the first wall is provided with a liquid injection hole, the third protruding part is provided with a clearance part, and in the length direction of the main body part, the clearance part and the liquid injection hole at least partially overlap.

In the above solution, the arrangement of the clearance part can reduce the influence of the first insulating member on the liquid injection, thereby facilitating the wetting of the electrode assembly with the electrolytic solution.

According to some embodiments of the present application, the body further has a second surface facing away from the second insulating member, in the thickness direction of the main body part, a distance between the second surface and the first surface is W₀, and a maximum distance between the protruding part and the first surface is W₁, satisfying W₁ >W₀.

In the above solution, the dimension by which the protruding part protrudes from the first surface is greater than the distance between the second surface and the first surface, such that the dimension of the body in the thickness direction of the main body part may be relatively small, thereby reducing space occupation.

According to some embodiments of the present application, a wall thickness of the shell is W₂, in the thickness direction of the main body part, a dimension of the battery cell is W, and a maximum distance between the protruding part and the second surface is W₃, satisfying 2W₂ ≤ W - W₃ ≤ W/10.

In the above solution, since the difference value between the dimension W of the battery cell in the thickness direction of the main body part and the maximum distance W₃ between the protruding part and the second surface satisfies the above relationship (2W₂ ≤ W - W₃ ≤ W/10), the assembly interference between the first insulating member and the shell can be reduced, and the first insulating member can also have a relatively large dimension in the thickness direction of the main body part, which can not only increase the insulating effect of the first insulating member on the first tab in the width direction of the main body part, but also enable the first insulating member and the electrode assembly to have a relatively large overlapping area, facilitating the positioning of the electrode assembly.

According to some embodiments of the present application, the second insulating member includes a first portion and a second portion connected to each other, and in the thickness direction of the main body part, the first tab is located between the first portion and the first insulating member; the first tab is located at one end of the main body part in the length direction, and in the length direction of the main body part, the second portion is disposed between the first wall and the first tab.

In the above solution, the first portion can achieve insulating isolation between the first tab and the shell in the thickness direction of the main body part, and the second portion can achieve insulating isolation between the first tab and the first wall in the length direction of the main body part, thereby reducing the risk of a short circuit caused by contact between the first tab and the shell.

According to some embodiments of the present application, the battery cell further includes a first adapter member, the first adapter member is connected to the first tab, in the length direction of the main body part, the second portion is disposed between the first adapter member and the first wall, and the first electrode terminal penetrates through the second portion to be electrically connected to the first adapter member.

In the above solution, the first adapter member achieves the electrical connection between the first tab and the first electrode terminal, facilitating the lead-out or lead-in of the electric energy of the electrode assembly.

According to some embodiments of the present application, in the thickness direction of the main body part, the second portion is in contact with the first insulating member.

In the above solution, the second portion is in contact with the first insulating member, which can provide a relatively good insulating effect on the first tab, and meanwhile, the second portion can position the first insulating member.

According to some embodiments of the present application, the first insulating member includes the body and the protruding part, the body includes the first surface facing the second insulating member and the second surface facing away from the second insulating member, the protruding part protrudes from the first surface, and the second portion is in contact with the first surface.

In the above solution, the second portion is in contact with the first surface to position the first insulating member. The body, the protruding part, the first portion, and the second portion achieve the insulation of the first tab from different positions, thereby reducing the risk of contact between the first tab and the shell.

According to some embodiments of the present application, in the thickness direction of the main body part, the distance between the second surface and the first surface is W₀, satisfying 0.05 mm ≤ W₀ ≤ 1 mm.

In the above solution, since the distance W₀ between the second surface and the first surface satisfies the above relationship (0.05 mm ≤ W₀ ≤ 1 mm), the body occupies a relatively small assembly space, and has a relatively high strength, and can provide a relatively good supporting effect on the electrode assembly.

According to some embodiments of the present application, 0.2 mm ≤ W₀ ≤ 0.6 mm.

In the above solution, compared with W₀ < 0.2 mm, in the case where W₀ ≥ 0.2 mm, the dimension of the body in the thickness direction of the main body part is relatively large, and the body has a relatively high strength and can provide a relatively good supporting effect on the electrode assembly; compared with W₀ > 0.6 mm, in the case where W₀ ≤ 0.6 mm, the body occupies a relatively small assembly space.

According to some embodiments of the present application, the shell further includes a second wall and a third wall, the second wall and the third wall are disposed opposite to each other in the thickness direction of the main body part, the first insulating member is a first insulating layer disposed on an inner surface of the second wall, and the second insulating member is a second insulating layer disposed on an inner surface of the third wall.

In the above solution, the first insulating member is the first insulating layer disposed on the inner surface of the second wall, and the second insulating member is the second insulating layer disposed on the inner surface of the third wall, thereby achieving a simple structure and facilitating manufacturing.

According to some embodiments of the present application, the first insulating layer is adhesively connected and fixed to the second wall, and the second insulating layer is adhesively connected and fixed to the third wall.

In the above solution, the first insulating layer is adhesively connected and fixed to the second wall, and the second insulating layer is adhesively connected and fixed to the third wall, such that the operation is simple, and the processing and manufacturing difficulty is low.

According to some embodiments of the present application, the shell further includes the second wall and the third wall, the second wall and the third wall are disposed opposite to each other in the thickness direction of the main body part, the first insulating member is a first insulating coating layer applied to the inner surface of the second wall, and the second insulating member is a second insulating coating layer applied to the inner surface of the third wall.

In the above solution, the first insulating member is the first insulating coating layer applied to the inner surface of the second wall, and the second insulating member is the second insulating coating layer applied to the inner surface of the third wall, such that the operation is simple, and the processing difficulty is low.

According to some embodiments of the present application, the first insulating coating layer and the second insulating coating layer both include at least one of polyester resin, polyurethane, and epoxy resin.

In the above solution, by using at least one of the polyester resin, the polyurethane, and the epoxy resin, a relatively good insulating effect is achieved.

According to some embodiments of the present application, a thickness of the first insulating coating layer and a thickness of the second insulating coating layer are both M, satisfying 0.005 mm ≤ M ≤ 0.2 mm.

In the above solution, since the thickness of the first insulating coating layer and the thickness of the second insulating coating layer satisfy the above relationship (0.005 mm ≤ M ≤ 0.2 mm), a relatively good insulating effect is achieved, while also saving material and occupying less space.

According to some embodiments of the present application, 0.01 mm ≤ M ≤ 0.1 mm.

In the above solution, since the thickness of the first insulating coating layer and the thickness of the second insulating coating layer satisfy the above relationship (0.01 mm ≤ M ≤ 0.1 mm), in the case of having a relatively good insulating effect, relatively less material is used, and the occupied space is relatively small.

According to some embodiments of the present application, the shell includes an end cover and a shell body, the shell body includes a bottom wall and a plurality of side walls, the plurality of side walls are disposed in an enclosing manner at an edge of the bottom wall, in the thickness direction of the main body part, one end of each of the plurality of side walls is connected to the bottom wall, the other end of each of the plurality of side walls defines an opening in an enclosing manner, and the end cover closes the opening; the first wall is one side wall of the plurality of side walls.

In the above solution, the first wall is one side wall, facilitating the electrical connection between the first electrode terminal and an external component.

According to some embodiments of the present application, an area of an outer surface of the bottom wall is greater than an area of an outer surface of any one of the side walls.

In the above solution, the bottom wall and the end cover may be a large surface (a wall with a relatively large area) of the battery cell, facilitating the stacking of a plurality of battery cells in the direction perpendicular to the bottom wall, thereby reducing space occupation.

According to some embodiments of the present application, the electrode assembly further includes the second tab having a polarity opposite to that of the first tab, the second tab and the first tab are located at the same end of the main body part in the length direction, and the second tab is electrically connected to the first wall.

In the above solution, the second tab is electrically connected to the first wall, such that the components can be reduced, thereby reducing costs.

In a second aspect, the embodiments of the present application further provide a battery. The battery includes the battery cell according to any one of the above embodiments.

In a third aspect, the embodiments of the present application further provide an electric device. The electric device includes the battery cell or the battery according to any one of the above embodiments, and the battery cell or the battery is configured to provide electric energy.

The additional aspects and the advantages of the present application will be partially provided in the following description, will partially become apparent from the following description, or will be learned through the practice of the present application.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a cross-sectional view of a battery cell according to some embodiments of the present application;
FIG. 5 is a partial enlarged view of A in FIG. 4;
FIG. 6 is an exploded view of a battery cell according to some other embodiments of the present application;
FIG. 7 is a schematic structural diagram of a first insulating member according to some embodiments of the present application;
FIG. 8 is a schematic structural diagram of a second insulating member according to some embodiments of the present application;
FIG. 9 is an exploded view of a battery cell according to yet some other embodiments of the present application;
FIG. 10 is a schematic structural diagram of a second insulating member disposed on a third wall in FIG. 9;
FIG. 11 is a schematic diagram of cooperation between a first tab and a first insulating member and a second insulating member according to some embodiments of the present application;
FIG. 12 is an exploded view of a battery cell according to yet some other embodiments of the present application;
FIG. 13 is a schematic structural diagram of a second insulating member disposed on a third wall in FIG. 12; and
FIG. 14 is a schematic assembly diagram of a second wall and a first insulating member according to some embodiments of the present application.

The drawings are not drawn to scale.

Description of reference numerals: 100-battery; 10-case; 11-first sub-case; 12-second sub-case; 20-battery cell; 21-shell; 211-first wall; 2111-liquid injection hole; 212-shell body; 2121-bottom wall; 2122-side wall; 213-end cover; 214-second wall; 215-third wall; 22-first electrode terminal; 23-electrode assembly; 231-main body part; 2311-first end surface; 232-first tab; 233-second tab; 24-first insulating member; 241-body; 241a-first surface; 241b-second surface; 242-protruding part; 242a-first protruding part; 242b-second protruding part; 242c-third protruding part; 2421-hollow structure; 243-clearance part; 25-second insulating member; 251-first portion; 252-second portion; 253-through hole; 26-first adapter member; 27-third insulating member; 28-second electrode terminal; 200-controller; 300-motor; 1000-vehicle; X-thickness direction of main body part; Y-length direction of main body part; Z-width direction of main body part.

### DETAILED DESCRIPTION

To make the objectives, technical solutions, and advantages of embodiments of the present application clearer, the technical solutions in the embodiments of the present application will be clearly and comprehensively described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

The term "plurality of" used in the present application refers to no less than two (including two). Similarly, "plurality of groups" refers to two or more (including two) groups, and "plurality of pieces" refers to two or more (including two) pieces.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

In the embodiments of the present application, the battery cell may be a secondary battery. The secondary battery refers to a battery cell that can be reused by activating the active material through charging after the battery cell is discharged.

The battery cell may, but is not limited to, be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used.

In some embodiments, the negative electrode may be a negative electrode plate, and the negative electrode plate may include a negative electrode current collector.

As an example, the negative electrode current collector may be a metal foil or a composite current collector. For example, for the metal foil, aluminum treated with silver on the surface, stainless steel treated with silver on the surface, stainless steel, copper, aluminum, nickel, carbon electrode, carbon, nickel, titanium, or the like may be used.

In some embodiments, the negative electrode current collector has two surfaces opposite to each other in its own thickness direction, and the negative electrode active material is disposed on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the electrode assembly is of a wound structure. The positive electrode plate and the negative electrode plate are wound to form a wound structure.

In some embodiments, the electrode assembly is of a stacked structure.

In some embodiments, the battery cell may include a shell. The shell is configured to encapsulate components such as electrode assemblies and electrolytes.

In some embodiments, the shell includes an end cover and a shell body. The shell body is provided with an opening, and the end cover closes the opening to form a confined space for accommodating the electrode assembly, the electrolyte, and other substances. The shell body may be provided with one or more openings. There may also be one or more end covers.

In some embodiments, at least one electrode terminal is disposed on the shell, and the electrode terminal is electrically connected to the tabs of the electrode assembly. The electrode terminal may be directly connected to the tabs or may be indirectly connected to the tabs through an adapter member. The electrode terminal may be disposed on the end cover, or may also be disposed on the shell body.

In some embodiments, the shell is provided with an anti-explosion valve. The anti-explosion valve is configured to relieve the internal pressure of the battery cell.

Battery technology advancement requires consideration of various design factors at the same time, such as energy density, discharge capacity, charging and discharging rate, and other performance parameters. In addition, the reliability of the battery also needs to be considered.

In some embodiments, the battery cell includes a shell, a first electrode terminal, and an electrode assembly. The shell includes a first wall, the first electrode terminal is disposed on the first wall, and the electrode assembly is disposed in the shell. The electrode assembly includes a main body part and a first tab, the main body part is of a flat shape, the main body part has a first end surface facing the first wall, and the first tab is disposed on the first end surface. During the assembly of the battery cell, the first tab needs to be bent to allow the electrode assembly to be inserted into the shell. In the thickness direction of the electrode assembly, the first tab is close to the shell. To insulate the first tab, the outer surface of the first tab is provided with an insulating adhesive tape. However, due to immersion in the electrolytic solution, the insulating adhesive tape is prone to detachment, which easily causes a short circuit due to contact between the first tab and the shell in the thickness direction of the main body part, resulting in lower reliability of the battery cell.

In view of this, the embodiments of the present application provide a technical solution. A battery cell includes a shell, a first electrode terminal, and an electrode assembly, the shell includes a first wall, the first electrode terminal is disposed on the first wall, the electrode assembly is disposed in the shell, the electrode assembly includes a main body part and a first tab, the main body part is of a flat shape, the main body part has a first end surface facing the first wall, and the first tab is disposed on the first end surface. The battery cell further includes a first insulating member and a second insulating member disposed in the shell, and in the thickness direction of the main body part, the first tab is located between the first insulating member and the second insulating member, so as to reduce the probability of contact between the first tab and the shell in the thickness direction of the main body part, thereby improving the reliability of the battery cell.

In such a battery cell, since the first tab is located between the first insulating member and the second insulating member in the thickness direction of the main body part, the orthographic projection of the first tab in the thickness direction of the main body part and the orthographic projection of the first insulating member in the thickness direction of the main body part at least partially overlap, and the orthographic projection of the first tab in the thickness direction of the main body part and the orthographic projection of the second insulating member in the thickness direction of the main body part at least partially overlap. The first insulating member and the second insulating member can insulate and isolate the first tab from the shell in the thickness direction of the main body part, thereby reducing the risk of a short circuit caused by contact between the first tab and the shell. As a result, the battery cell has relatively high reliability.

The battery disclosed in the embodiments of the present application may, but is not limited to, be used in electric devices such as vehicles, ships, or aircraft. The power system of the electric device may be composed of the battery disclosed in the present application.

The embodiments of the present application provide an electric device using a battery as a power source. The electric device may be, but is not limited to, a mobile phone, a tablet, a laptop computer, an electric toy, an electric tool, an electric bicycle, an electric motorcycle, an electric vehicle, a ship, a spacecraft, or the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

In the following embodiments, for ease of description, the present application is illustrated by taking a vehicle 1000 as an example of the electric device according to an embodiment of the present application.

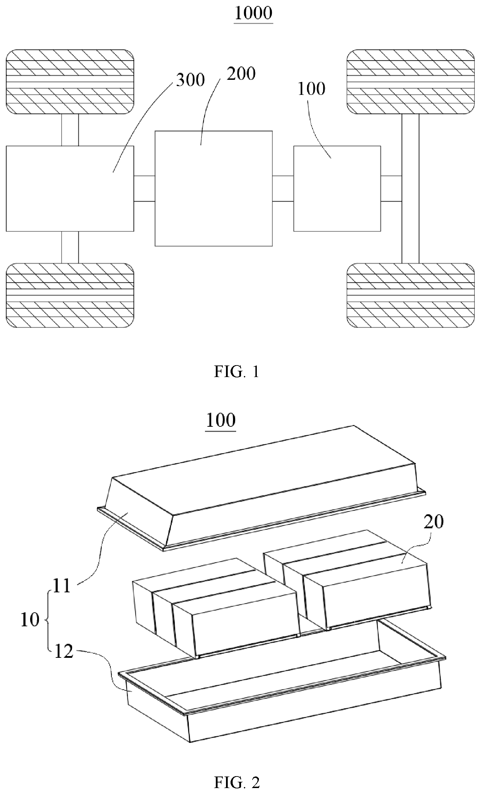

Referring to FIG. 1, FIG. 1 is a schematic structural diagram of a vehicle according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be used to supply power to the vehicle 1000. For example, the battery 100 may serve as an operation power source for the vehicle 1000 and is used in the circuit system of the vehicle 1000, for example, for operation power needed for start-up, navigating, and driving of the vehicle 1000.

The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery according to some embodiments of the present application. The battery 100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first sub-case 11 and a second sub-case 12. The first sub-case 11 and the second sub-case 12 are lidded with each other. The first sub-case 11 and the second sub-case 12 jointly define the accommodating space for accommodating the battery cell 20. The second sub-case 12 may be of a hollow structure with one end open, and the first sub-case 11 may be of a plate-shaped structure. The open side of the second sub-case 12 is lidded with the first sub-case 11, such that the first sub-case 11 and the second sub-case 12 jointly define the accommodating space. The first sub-case 11 and the second sub-case 12 may also be of a hollow structure with one side open, and the open side of the second sub-case 12 is lidded with the open side of the first sub-case 11.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection among the plurality of battery cells 20.

The battery cell 20 may be a secondary battery or a primary battery; the battery cell 20 may also be a lithium-sulfur battery, a sodium-ion battery, or a magnesium-ion battery, but is not limited thereto.

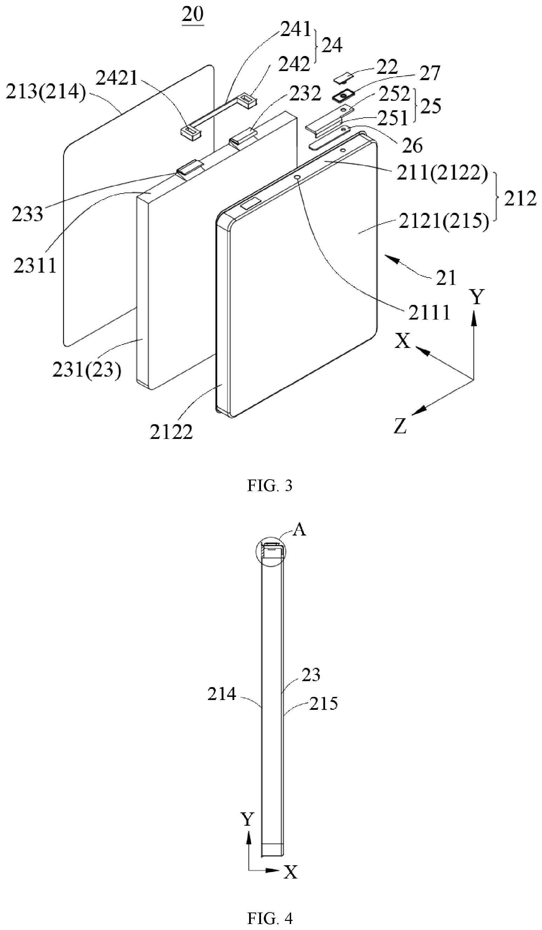

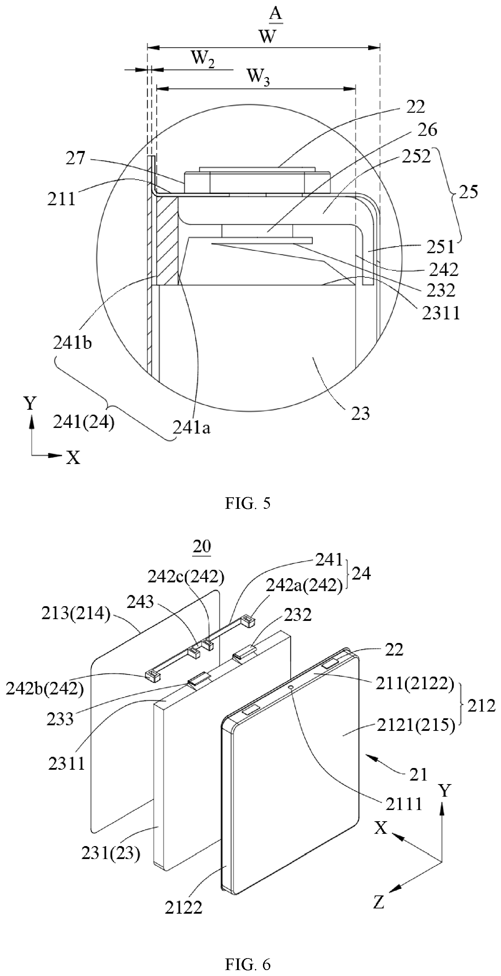

Referring to FIGs. 3 to 5, FIG. 3 is an exploded view of a battery cell according to some embodiments of the present application, FIG. 4 is a cross-sectional view of a battery cell according to some embodiments of the present application, and FIG. 5 is a partial enlarged view of A in FIG. 4. According to some embodiments of the present application, the embodiments of the present application provide a battery cell 20. The battery cell 20 includes a shell 21, a first electrode terminal 22, an electrode assembly 23, a first insulating member 24, and a second insulating member 25. The shell 21 includes a first wall 211; the first electrode terminal 22 is disposed on the first wall 211 in an insulated manner; the electrode assembly 23 is disposed in the shell 21, the electrode assembly 23 includes a main body part 231 and a first tab 232, the main body part 231 is of a flat shape, the main body part 231 has a first end surface 2311 facing the first wall 211, the first tab 232 is disposed on the first end surface 2311, and the first tab 232 is electrically connected to the first electrode terminal 22; and the first insulating member 24 and the second insulating member 25 are disposed in the shell 21, and in a thickness direction X of the main body part 231, the first tab 232 is located between the first insulating member 24 and the second insulating member 25.

The shell 21 may include a shell body 212 and an end cover 213. The shell body 212 has an opening to facilitate the insertion of the electrode assembly 23 into the interior of the shell body 212, and the end cover 213 closes the opening. The first wall 211 may be a wall part of the shell body 212, and the first wall 211 may also be the end cover 213.

The shell body 212 is a component configured to form the internal environment of the battery cell 20 in combination with the end cover 213. The formed internal environment may be used to accommodate the electrode assembly 23, the electrolytic solution, and other components. The shell body 212 and the end cover 213 may be separate components. The shell body 212 may be of various shapes and dimensions. Specifically, the shape of the shell body 212 may be determined according to the specific shape and dimension of the electrode assembly 23. The shell body 212 may be made of various materials, such as copper, iron, aluminum, stainless steel, aluminum alloy, and plastic.

The end cover 213 is a component that lids the opening of the shell body 212 to isolate the internal environment of the battery cell 20 from the external environment. Without limitation, the shape of the end cover 213 may be adapted to the shape of the shell body 212 to match the shell body 212. Optionally, the end cover 213 may be made of a material with a certain hardness and strength (for example, an aluminum alloy), such that the end cover 213 is not easily deformed when being compressed or collided. This enables the battery cell 20 to have higher structural strength, and the reliability can also be improved. Functional components, such as electrode terminals, may be provided on the end cover 213. The electrode terminal may be configured to be electrically connected to the electrode assembly 23 to output or input the electric energy of the battery cell 20. The end cover 213 may also be made of a variety of materials, such as copper, iron, aluminum, stainless steel, aluminum alloy, and plastic, which is not specifically limited in the embodiments of the present application. In some embodiments, an insulating structure may also be provided on the inner side of the end cover 213, and the insulating structure may be configured to isolate an electrical connection component in the shell body 212 from the end cover 213 to reduce the risk of a short circuit. Illustratively, the insulating structure may be made of plastic, rubber, or the like.

The electrode assembly 23 is a component where the electrochemical reaction occurs in the battery cell 20. One or more electrode assemblies 23 may be accommodated in the shell body 212. The electrode assembly 23 is mainly formed by winding or stacking a positive electrode plate and a negative electrode plate, and a separation film is typically provided between the positive electrode plate and the negative electrode plate. The separation film is configured to isolate the positive electrode plate from the negative electrode plate, thereby preventing a short circuit caused by internal contact between the positive electrode plate and the negative electrode plate. The portions of the positive electrode plate and the negative electrode plate that contain active substance constitute the main body part 231 of the electrode assembly 23, and the portions of the positive electrode plate and the negative electrode plate that do not contain active substance each constitute a tab. The positive electrode tab and the negative electrode tab may be located together at one end of the main body part 231 or respectively at two ends of the main body part 231. During the charging and discharging process of the battery, the positive electrode active substance and the negative electrode active substance react with the electrolytic solution, and the tabs are connected to the electrode terminals to form a current circuit.

In some embodiments, the first wall 211 is provided with a mounting hole for the first electrode terminal 22 to penetrate through, and a portion of the first electrode terminal 22 is inserted into the mounting hole to be electrically connected to the first tab 232. A third insulating member 27 is provided between the first electrode terminal 22 and the first wall 211 to insulate and isolate the first electrode terminal 22 from the first wall 211. For example, the third insulating member 27 may be disposed on one side of the first wall 211 facing away from the interior of the battery cell 20 and in the mounting hole.

The main body part 231 is of a flat shape, and the shell 21 may also be of a flat shape to match the shape of the main body part 231. The electrode assembly 23 may be of a stacked structure or a wound structure.

In the figures, the direction indicated by the letter X may be the thickness direction X of the main body part 231.

The first end surface 2311 is a surface of the main body part 231 facing the first wall 211, and the first end surface 2311 and the first wall 211 are spaced apart from each other in the thickness direction of the first wall 211. The thickness direction of the first wall 211 may intersect with the thickness direction X of the main body part 231.

The first tab 232 may be directly connected to the first electrode terminal 22, or may be indirectly connected to the first electrode terminal 22 through an adapter member.

The first tab 232 is disposed on the first end surface 2311 of the main body part 231 facing the first wall 211, so as to facilitate the electrical connection between the first tab 232 and the first electrode terminal 22.

In the thickness direction X of the main body part 231, the first tab 232 is located between the first insulating member 24 and the second insulation. It may be that the orthographic projection of the first tab 232 in the thickness direction X of the main body part 231 and the orthographic projection of the first insulating member 24 in the thickness direction X of the main body part 231 at least partially overlap, and the orthographic projection of the first tab 232 in the thickness direction X of the main body part 231 and the orthographic projection of the second insulating member 25 in the thickness direction X of the main body part 231 at least partially overlap.

According to the battery cell 20 of the embodiments of the present application, by providing the first insulating member 24 and the second insulating member 25 in the shell 21, in the thickness direction X of the main body part 231, the first tab 232 is located between the first insulating member 24 and the second insulating member 25, the orthographic projection of the first tab 232 in the thickness direction X of the main body part 231 and the orthographic projection of the first insulating member 24 in the thickness direction X of the main body part 231 at least partially overlap, and the orthographic projection of the first tab 232 in the thickness direction X of the main body part 231 and the orthographic projection of the second insulating member 25 in the thickness direction X of the main body part 231 at least partially overlap. The first insulating member 24 and the second insulating member 25 can insulate and isolate the first tab 232 from the shell 21 in the thickness direction X of the main body part 231, thereby reducing the risk of a short circuit caused by contact between the first tab 232 and the shell 21. As a result, the battery cell 20 has relatively high reliability.

Referring to FIG. 5, according to some embodiments of the present application, the orthographic projection of the first tab 232 in the thickness direction X of the main body part 231 falls within the orthographic projection of the first insulating member 24 in the thickness direction X of the main body part 231, and the orthographic projection of the first tab 232 in the thickness direction X of the main body part 231 falls within the orthographic projection of the second insulating member 25 in the thickness direction X of the main body part 231.

The orthographic projection of the first tab 232 in the thickness direction X of the main body part 231 falls within the orthographic projection of the first insulating member 24 in the thickness direction X of the main body part 231, that is, in the thickness direction X of the main body part 231, when viewed in the direction from the first tab 232 toward the first insulating member 24, the first tab 232 and the first insulating member 24 have a relatively large overlapping area, the first tab 232 can be shielded by the first insulating member 24, and the first insulating member 24 can insulate and isolate the first tab 232 from the shell 21 in the thickness direction X of the main body part 231.

The orthographic projection of the first tab 232 in the thickness direction X of the main body part 231 falls within the orthographic projection of the second insulating member 25 in the thickness direction X of the main body part 231, that is, in the thickness direction X of the main body part 231, when viewed in the direction from the first tab 232 toward the second insulating member 25, the first tab 232 and the second insulating member 25 have a relatively large overlapping area, the first tab 232 can be shielded by the second insulating member 25, and the second insulating member 25 can insulate and isolate the first tab 232 from the shell 21 in the thickness direction X of the main body part 231.

In the above solution, the orthographic projection of the first tab 232 in the thickness direction X of the main body part 231 falls within the orthographic projection of the first insulating member 24 in the thickness direction X of the main body part 231, such that the first insulating member 24 and the first tab 232 have a relatively large overlapping area. The orthographic projection of the first tab 232 in the thickness direction X of the main body part 231 falls within the orthographic projection of the second insulating member 25 in the thickness direction X of the main body part 231, such that the second insulating member 25 and the first tab 232 have a relatively large overlapping area. As a result, the first insulating member 24 and the second insulating member 25 can effectively insulate and isolate the first tab 232 from the shell 21.

According to some embodiments of the present application, the first insulating member 24 is disposed between the first wall 211 and the first end surface 2311.

The first insulating member 24 is disposed between the first wall 211 and the first end surface 2311, that is, when viewed in the thickness direction of the first wall 211, the first insulating member 24 and the first wall 211 at least partially overlap, and the first insulating member 24 and the first end surface 2311 at least partially overlap. When the first insulating member 24 is placed on the first end surface 2311, the first insulating member 24 can position the electrode assembly 23.

Referring to FIG. 5, according to some embodiments of the present application, the first insulating member 24 is in contact with both the first wall 211 and the first end surface 2311.

The first insulating member 24 being in contact with both the first wall 211 and the first end surface 2311 may be that two opposite surfaces of the first insulating member 24 in the thickness direction of the first wall 211 are in contact with the first wall 211 and the first end surface 2311, respectively, which may be understood as the first insulating member 24 being supported between the first wall 211 and the first end surface 2311.

In some embodiments, the first insulating member 24 has a certain strength. When the electrode assembly 23 moves toward the first wall 211, the first insulating member 24 can limit the electrode assembly 23 to reduce the risk of contact between the electrode assembly 23 and the first wall 211, which could lead to a short circuit between the positive and negative electrodes.

In the above solution, the first insulating member 24 is in contact with both the first wall 211 and the first end surface 2311, and the first insulating member 24 can achieve positioning of the electrode assembly 23 and restrict the movement of the electrode assembly 23 toward the first wall 211.

Referring to FIGs. 3 and 5, according to some embodiments of the present application, the first insulating member 24 includes a body 241 and a protruding part 242. In the thickness direction X of the main body part 231, the first tab 232 is located between the body 241 and the second insulating member 25, the body 241 has a first surface 241a facing the second insulating member 25, and the protruding part 242 is connected to the body 241 and protrudes from the first surface 241a.

The first tab 232 is located between the body 241 and the second insulating member 25 in the thickness direction X of the main body part 231. When viewed in the thickness direction X of the main body part 231, the first tab 232 and the body 241 have a relatively large overlapping area, and the body 241 can provide a shielding effect for the first tab 232.

The first surface 241a is a surface of the body 241 in the thickness direction X of the main body part 231, and the first surface 241a intersects with the thickness direction X of the main body part 231. The body 241 may further have a second surface 241b, the second surface 241b is disposed facing away from the second insulating member 25, and the second surface 241b and the first surface 241a are located at two ends of the body 241 in the thickness direction X of the main body part 231.

The protruding part 242 protrudes from the first surface 241a, and the protruding part 242 protrudes toward the second insulating member 25 in the thickness direction X of the main body part 231. In some embodiments, one end of the protruding part 242 distal to the first surface 241a may be in contact with the shell 21.

The protruding part 242 may be fixed to the body 241. For example, the protruding part 242 and the body 241 may be integrally formed; or the protruding part 242 may be connected to the body 241 via a snap-fit connection, a hot-melting connection, an adhesive connection, or the like.

In the above solution, the protruding part 242 protrudes from the first surface 241a, and the dimension of the body 241 in the thickness direction X of the main body part 231 may be relatively small, so as to reduce space occupation. Meanwhile, the strength of the body 241 can be increased. When the first insulating member 24 is in contact with both the first wall 211 and the first end surface 2311, the arrangement of the protruding part 242 can increase the contact area between the first insulating member 24 and the first wall 211 and the first end surface 2311, thereby providing a relatively good positioning effect on the electrode assembly 23.

In some embodiments, the protruding part 242 extends from one end of the body 241 in the thickness direction of the first wall 211 to the other end of the body 241 in the thickness direction of the first wall 211, that is, the two opposite end surfaces of the protruding part 242 in the thickness direction of the first wall 211 are flush with the two opposite end surfaces of the body 241 in the thickness direction of the first wall 211.

Referring to FIG. 3, in some embodiments, the protruding part 242 may have a hollow structure 2421 to reduce the weight of the first insulating member 24.

Referring to FIG. 3, according to some embodiments of the present application, the first tab 232 is located at one end of the main body part 231 in the length direction Y, the body 241 extends in the width direction Z of the main body part 231, a plurality of protruding parts 242 are provided, the plurality of protruding parts 242 are spaced apart from each other in the width direction Z of the main body part 231, and the first tab 232 is located between two adjacent protruding parts 242 in the width direction Z of the main body part 231.

The first tab 232 is located on the first end surface 2311 of the main body part 231 facing the first wall 211, and the first tab 232 is located at one end of the main body part 231 in the length direction Y, that is, the first end surface 2311 is an end surface of the main body part 231 in the length direction Y.

The length direction Y of the main body part 231 may be parallel to the thickness direction of the first wall 211. The length direction Y of the main body part 231 may be parallel to the length direction of the battery cell 20. In this case, the first electrode terminal 22 may be located at one end of the battery cell 20 in the length direction, so as to facilitate the electrical connection to other components.

The body 241 extends in the width direction Z of the main body part 231, and the length direction of the body 241 may be parallel to the width direction Z of the main body part 231.

The plurality of protruding parts 242 are spaced apart from each other in the width direction Z of the main body part 231, that is, the plurality of protruding parts 242 are spaced apart from each other in the extending direction of the body 241, so as to properly utilize the space in the extending direction of the body 241.

The first tab 232 is located between two adjacent protruding parts 242 in the width direction Z of the main body part 231. When viewed in the width direction Z of the main body part 231, the first tab 232 and the corresponding protruding part 242 at least partially overlap, and the protruding part 242 can provide a shielding effect for the first tab 232 in the width direction Z of the main body part 231.

In the above solution, the first tab 232 is located between two adjacent protruding parts 242, and can have a relatively large overlapping area with the first tab 232 in the width direction Z of the main body part 231, so as to form insulating isolation for the first tab 232 in the width direction Z of the main body part 231, thereby reducing the probability of contact between the first tab 232 and the shell 21. A plurality of protruding parts 242 are provided, which can increase the strength of the body 241; and when the first insulating member 24 is configured to position the electrode assembly 23, the arrangement of a plurality of protruding parts 242 can improve the positioning of the electrode assembly 23 at multiple positions.

In some embodiments, the number of the protruding parts 242 may be two, and in the width direction Z of the main body part 231, the first tab 232 is located between the two adjacent protruding parts 242. The two protruding parts 242 are disposed at two ends of the body 241 in the width direction Z of the main body part 231. For example, the dimension of the body 241 in the width direction Z of the main body part 231 may be relatively small, and the protruding parts 242 may be disposed adjacent to the first tab 232 to reduce the material and weight of the first insulating member 24.

According to some embodiments of the present application, in the width direction Z of the main body part 231, the orthographic projection of the first tab 232 falls within the orthographic projection of the protruding part 242.

In the above solution, since the orthographic projection of the first tab 232 falls within the orthographic projection of the protruding part 242, in one aspect, the insulating effect of the protruding part 242 on the first tab 232 can be increased; in another aspect, the protruding part 242 and the electrode assembly 23 can have a relatively large overlapping area, thereby providing a relatively good positioning effect on the electrode assembly 23.

According to some embodiments of the present application, the body 241, the two adjacent protruding parts 242, and the second insulating member 25 define an accommodating space for accommodating the first tab 232.

The accommodating space may be defined by the body 241, the two adjacent protruding parts 242, and the second insulating member 25 in an enclosing manner. The first tab 232 may be surrounded by the body 241, the two adjacent protruding parts 242, and the second insulating member 25. In the width direction Z of the main body part 231, the first tab 232 can be shielded by the two protruding parts 242; and in the thickness direction X of the main body part 231, the first tab 232 can be shielded by the body 241 and the second insulating member 25.

In the above solution, the first tab 232 is accommodated in the accommodating space, which provides a relatively good insulating effect on the first tab 232, reducing the probability of contact between the first tab 232 and the shell 21.

Referring to FIG. 6, FIG. 6 is an exploded view of a battery cell according to some other embodiments of the present application. According to some embodiments of the present application, the electrode assembly 23 further includes a second tab 233 having a polarity opposite to that of the first tab 232. The second tab 233 and the first tab 232 are located at the same end of the main body part 231 in the length direction Y, and in the width direction Z of the main body part 231, the second tab 233 is located between two adjacent protruding parts 242.

The first tab 232 may be a positive electrode tab, and the second tab 233 may be a negative electrode tab.

The second tab 233 and the first tab 232 are located at the same end of the main body part 231 in the length direction Y, and the second tab 233 and the first tab 232 may be spaced apart from each other in the width direction Z of the main body part 231. For example, the second tab 233 and the first tab 232 may be located at two ends of the main body part 231 in the width direction Z, such that the second tab 233 and the first tab 232 have a relatively large spacing in the width direction Z of the main body part 231.

In the width direction Z of the main body part 231, the second tab 233 is located between the two adjacent protruding parts 242, and the orthographic projection of the two protruding parts 242 and the second tab 233 can at least partially overlap, thereby shielding the second tab 233 in the width direction Z of the main body part 231, limiting the movement of the second tab 233, and reducing the probability of contact between the second tab 233 and the shell 21.

In the above solution, the second tab 233 and the first tab 232 are located at the same end of the main body part 231 in the length direction Y, facilitating the lead-out of electric energy of the electrode assembly 23, and facilitating the assembly of the electrode assembly 23 and the shell 21. The second tab 233 is located between two adjacent protruding parts 242, the first insulating member 24 has a relatively large dimension in the width direction Z of the main body part 231, and when viewed in the length direction Y of the main body part 231, the first insulating member 24 and the electrode assembly 23 have a relatively large overlapping area in the width direction Z of the main body part 231, thereby providing a relatively good positioning effect on the electrode assembly 23.

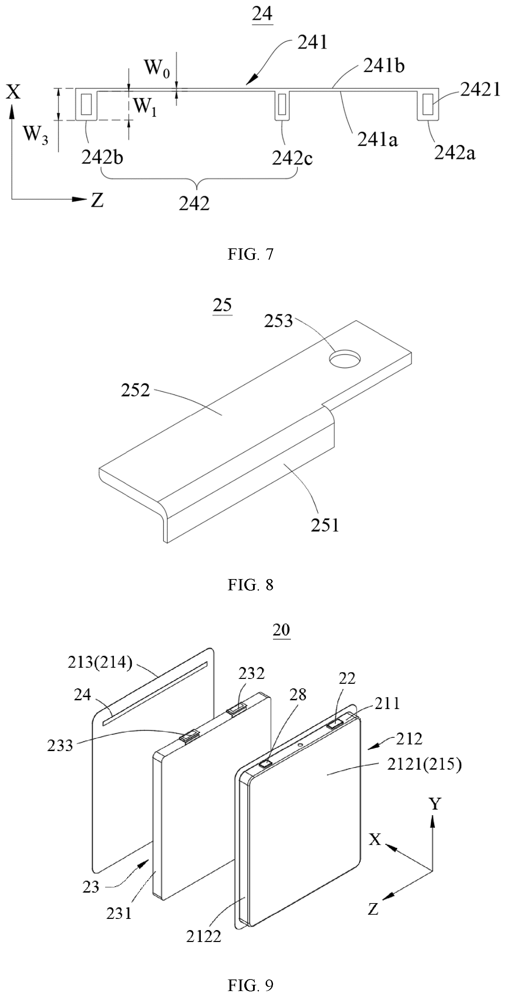

Referring to FIG. 6, and further referring to FIG. 7, FIG. 7 is a schematic structural diagram of a first insulating member according to some embodiments of the present application. According to some embodiments of the present application, the plurality of protruding parts 242 include a first protruding part 242a, a second protruding part 242b, and a third protruding part 242c. In the width direction Z of the main body part 231, the first protruding part 242a and the second protruding part 242b are respectively located at two opposite ends of the body 241, the third protruding part 242c is located between the first protruding part 242a and the second protruding part 242b, the first tab 232 is located between the first protruding part 242a and the third protruding part 242c, and the second tab 233 is located between the second protruding part 242b and the third protruding part 242c.

The first protruding part 242a, the third protruding part 242c, and the second protruding part 242b are sequentially distributed in the width direction Z of the main body part 231.

In the above solution, the first tab 232 is located between the first protruding part 242a and the third protruding part 242c, and the second tab 233 is located between the second protruding part 242b and the third protruding part 242c, such that the first tab 232 and the second tab 233 can be insulated and isolated in the width direction Z of the main body part 231, thereby reducing the probability of contact between the first tab 232 and the shell 21 as well as between the second tab 233 and the shell. When the first insulating member 24 is in contact with both the first wall 211 and the first end surface 2311, the first protruding part 242a and the second protruding part 242b are located at two ends of the body 241 in the width direction Z of the main body part 231, and the third protruding part 242c is located between the first protruding part 242a and the second protruding part 242b, thereby facilitating the stable positioning of the electrode assembly 23 by the first insulating member 24, and restricting the movement of the electrode assembly 23 toward the first wall 211.

Referring to FIG. 6, according to some embodiments of the present application, the first wall 211 is provided with a liquid injection hole 2111, the third protruding part 242c is provided with a clearance part 243, and in the length direction Y of the main body part 231, the clearance part 243 and the liquid injection hole 2111 at least partially overlap.

The liquid injection hole 2111 is configured to allow the electrolytic solution to be injected into the interior of the battery cell 20, the clearance part 243 may be a notch formed in the third protruding part 242c, and the clearance part 243 penetrates through the third protruding part 242c in the length direction Y of the main body part 231.

In the length direction Y of the main body part 231, the clearance part 243 and the liquid injection hole 2111 may partially overlap, or the clearance part 243 and the liquid injection hole 2111 may entirely overlap, such that when the electrolytic solution is injected into the interior of the battery cell 20 through the liquid injection hole 2111, the electrolytic solution can penetrate through the third protruding part 242c through the clearance part 243, thereby reducing theblocking of the electrolytic solution by the third protruding part 242c.

In the above solution, the arrangement of the clearance part 243 can reduce the influence of the first insulating member 24 on the liquid injection, thereby facilitating the wetting of the electrode assembly 23 with the electrolytic solution.

In some embodiments, the clearance part 243 may be formed by hollowing out a third protruding part 242c, or the clearance part 243 may be formed by the interspace between two third protruding parts 242c.

According to some embodiments of the present application, when the first wall 211 is provided with the liquid injection hole 2111, in the length direction Y of the main body part 231, the liquid injection hole 2111 may also not overlap with any protruding part 242.

Referring to FIG. 7, according to some embodiments of the present application, the body 241 further has a second surface 241b facing away from the second insulating member 25. In the thickness direction X of the main body part 231, the distance between the second surface 241b and the first surface 241a is W₀, and the maximum distance between the protruding part 242 and the first surface 241a is W₁, satisfying W₁ > W₀.

The second surface 241b and the first surface 241a are the surfaces at the two ends of the body 241 in the thickness direction X of the main body part 231. W₁ may also be the dimension by which the protruding part 242 protrudes from the first surface 241a in the thickness direction X of the main body part 231.

In the above solution, the dimension by which the protruding part 242 protrudes from the first surface 241a is greater than the distance between the second surface 241b and the first surface 241a, such that the dimension of the body 241 in the thickness direction X of the main body part 231 may be relatively small, thereby reducing space occupation.

Referring to FIG. 5, according to some embodiments of the present application, the wall thickness of the shell 21 is W₂, in the thickness direction X of the main body part 231, the dimension of the battery cell 20 is W, and the maximum distance between the protruding part 242 and the second surface 241b is W₃, satisfying 2W₂ ≤ W - W₃ ≤ W/10.

W may be the dimension of the battery cell 20 in the thickness direction X of the main body part 231, and may also be referred to as the thickness of the battery cell 20.

In the above solution, since the difference value between the dimension W of the battery cell 20 in the thickness direction X of the main body part 231 and the maximum distance W₃ between the protruding part 242 and the second surface 241b satisfies the above relationship (2W₂ ≤ W - W₃ ≤ W/10), in one aspect, the assembly interference between the first insulating member 24 and the shell 21 can be reduced, and in another aspect, the first insulating member 24 can also have a relatively large dimension in the thickness direction X of the main body part 231, which can not only increase the insulating effect of the first insulating member 24 on the first tab 232 in the width direction Z of the main body part 231, but also enable the first insulating member 24 and the electrode assembly 23 to have a relatively large overlapping area, facilitating the positioning of the electrode assembly 23.

Optionally, W-W₃ may be 0.1 mm to 3 mm. For example, W-W₃ may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, etc.

Referring to FIGs. 3 and 5, according to some embodiments of the present application, the second insulating member 25 includes a first portion 251 and a second portion 252 connected to each other, and in the thickness direction X of the main body part 231, the first tab 232 is located between the first portion 251 and the first insulating member 24; the first tab 232 is located at one end of the main body part 231 in the length direction Y, and in the length direction Y of the main body part 231, the second portion 252 is disposed between the first wall 211 and the first tab 232.

The first portion 251 and the second portion 252 may be integrally formed.

The first portion 251 and the second portion 252 may form an L-shaped structure.

In the thickness direction X of the main body part 231, the first tab 232 is located between the first portion 251 and the first insulating member 24, such that the first portion 251 and the first insulating member 24 form insulating isolation for the first tab 232 in the thickness direction X of the main body part 231.

In the above solution, the first portion 251 can achieve insulating isolation between the first tab 232 and the shell 21 in the thickness direction X of the main body part 231, and the second portion 252 can achieve insulating isolation between the first tab 232 and the first wall 211 in the length direction Y of the main body part 231, thereby reducing the risk of a short circuit caused by contact between the first tab 232 and the shell 21.

Referring to FIGs. 3 and 5, and further referring to FIG. 8, FIG. 8 is a schematic structural diagram of a second insulating member according to some embodiments of the present application. According to some embodiments of the present application, the battery cell 20 further includes a first adapter member 26, and the first adapter member 26 is connected to the first tab 232. In the length direction Y of the main body part 231, the second portion 252 is disposed between the first adapter member 26 and the first wall 211, and the first electrode terminal 22 penetrates through the second portion 252 to be electrically connected to the first adapter member 26.

The first adapter member 26 is configured to achieve the electrical connection between the first tab 232 and the first electrode terminal 22. The first adapter member 26 may be connected to the first tab 232 by welding.

The second portion 252 is provided with a through hole 253 for the first electrode terminal 22 to penetrate through, and a portion of the first electrode terminal 22 is disposed in the through hole 253 to be electrically connected to the first adapter member 26.

In the above solution, the first adapter member 26 achieves the electrical connection between the first tab 232 and the first electrode terminal 22, facilitating the lead-out or lead-in of the electric energy of the electrode assembly 23.

According to some embodiments of the present application, in the thickness direction X of the main body part 231, the second portion 252 is in contact with the first insulating member 24.

The second portion 252 is in contact with the first insulating member 24, and in the thickness direction X of the main body part 231, the first insulating member 24 is located between the shell 21 and the second portion 252, enabling the utilization of the space within the shell 21 in the thickness direction X of the main body part 231.

In the above solution, the second portion 252 is in contact with the first insulating member 24, which can provide a relatively good insulating effect on the first tab 232, and meanwhile, the second portion 252 can position the first insulating member 24.

According to some embodiments of the present application, the first insulating member 24 includes the body 241 and the protruding part 242, the body 241 includes the first surface 241a facing the second insulating member 25 and the second surface 241b facing away from the second insulating member 25, the protruding part 242 protrudes from the first surface 241a, and the second portion 252 is in contact with the first surface 241a.

The first surface 241a and the second surface 241b are two surfaces of the body 241 that are disposed opposite to each other in the thickness direction X of the main body part 231, and the first surface 241a and the second surface 241b are spaced apart from each other in the thickness direction X of the main body part 231.

The protruding part 242 protrudes from the first surface 241a in the thickness direction X of the main body part 231.

The end surface of the second portion 252 in the thickness direction X of the main body part 231 is in contact with the first surface 241a.

In the above solution, the second portion 252 is in contact with the first surface 241a to position the first insulating member 24. The body 241, the protruding part 242, the first portion 251, and the second portion 252 achieve the insulation of the first tab 232 from different positions, thereby reducing the risk of contact between the first tab 232 and the shell 21.

According to some embodiments of the present application, in the thickness direction X of the main body part 231, the distance between the second surface 241b and the first surface 241a is W₀, satisfying 0.05 mm ≤ W₀ ≤ 1 mm.

Optionally, W₀ may be 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, etc.

In the above solution, since the distance W₀ between the second surface 241b and the first surface 241a satisfies the above relationship (0.05 mm ≤ W₀ ≤ 1 mm), the body 241 occupies a relatively small assembly space, and has a relatively high strength, and can provide a relatively good supporting effect on the electrode assembly 23.

According to some embodiments of the present application, 0.2 mm ≤ W₀ ≤ 0.6 mm.

Optionally, W₀ may be 0.2 mm, 0.22 mm, 0.24 mm, 0.26 mm, 0.28 mm, 0.3 mm, 0.32 mm, 0.34 mm, 0.36 mm, 0.38 mm, 0.4 mm, 0.42 mm, 0.44 mm, 0.46 mm, 0.48 mm, 0.5 mm, 0.52 mm, 0.54 mm, 0.56 mm, 0.58 mm, 0.6 mm, etc.

In the above solution, compared with W₀ < 0.2 mm, in the case where W₀ ≥ 0.2 mm, the dimension of the body 241 in the thickness direction X of the main body part 231 is relatively large, and the body 241 has a relatively high strength and can provide a relatively good supporting effect on the electrode assembly 23; compared with W₀ > 0.6 mm, in the case where W₀ ≤ 0.6 mm, the body 241 occupies a relatively small assembly space.

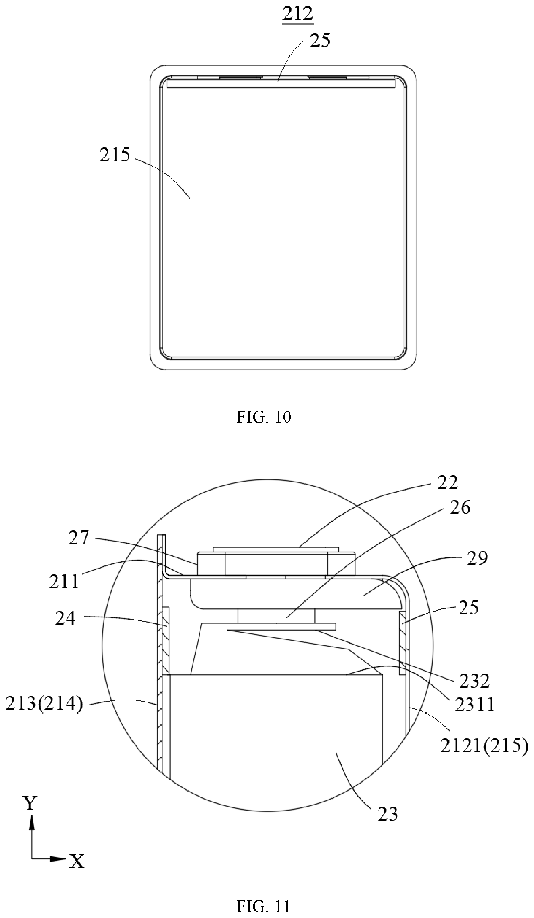

Referring to FIGs. 9 to 11, FIG. 9 is an exploded view of a battery cell according to yet some other embodiments of the present application, FIG. 10 is a schematic structural diagram of a second insulating member disposed on a third wall in FIG. 9, and FIG. 11 is a schematic diagram of cooperation between a first tab and a first insulating member and a second insulating member according to some embodiments of the present application. According to some embodiments of the present application, the shell 21 further includes a second wall 214 and a third wall 215, the second wall 214 and the third wall 215 are disposed opposite to each other in the thickness direction X of the main body part 231, the first insulating member 24 is a first insulating layer disposed on the inner surface of the second wall 214, and the second insulating member 25 is a second insulating layer disposed on the inner surface of the third wall 215.

One end of the second wall 214 in the length direction Y of the main body part 231 and one end of the third wall 215 in the length direction Y of the main body part 231 are separately connected to the first wall 211.

The inner surface of the second wall 214 refers to the surface of the second wall 214 for defining the internal space of the shell 21 in an enclosing manner, and the inner surface of the second wall 214 faces the electrode assembly 23. The inner surface of the third wall 215 refers to the surface of the third wall 215 for defining the internal space of the shell 21 in an enclosing manner, and the inner surface of the third wall 215 faces the electrode assembly 23.

The first insulating member 24 may be bonded to the inner surface of the second wall 214, or the first insulating member 24 may also be applied to the inner surface of the second wall 214. The second insulating member 25 may be bonded to the inner surface of the third wall 215, or the second insulating member 25 may also be applied to the inner surface of the third wall 215.

In the above solution, the first insulating member 24 is the first insulating layer disposed on the inner surface of the second wall 214, and the second insulating member 25 is the second insulating layer disposed on the inner surface of the third wall 215, thereby achieving a simple structure and facilitating manufacturing.

According to some embodiments of the present application, the first insulating layer is adhesively connected and fixed to the second wall 214, and the second insulating layer is adhesively connected and fixed to the third wall 215.

The first insulating member 24 may be an adhesive tape, an insulating sheet, an insulating block, or the like. Similarly, the second insulating member 25 may be an adhesive tape, an insulating sheet, an insulating block, or the like.

In the above solution, the first insulating layer is adhesively connected and fixed to the second wall 214, and the second insulating layer is adhesively connected and fixed to the third wall 215, such that the operation is simple, and the processing and manufacturing difficulty is low.

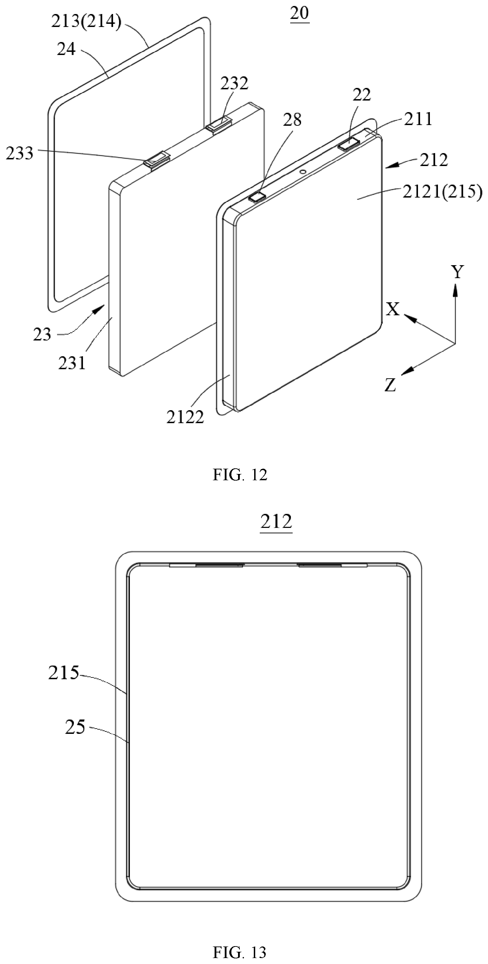

Referring to FIGs. 12 and 13, FIG. 12 is an exploded view of a battery cell according to yet some other embodiments of the present application, and FIG. 13 is a schematic structural diagram of a second insulating member disposed on a third wall in FIG. 12. According to some embodiments of the present application, the shell 21 further includes the second wall 214 and the third wall 215, the second wall 214 and the third wall 215 are disposed opposite to each other in the thickness direction X of the main body part 231, the first insulating member 24 is a first insulating coating layer applied to the inner surface of the second wall 214, and the second insulating member 25 is a second insulating coating layer applied to the inner surface of the third wall 215.

The second wall 214 and the third wall 215 are separately connected to the first wall 211 at the same end of the main body part 231 in the length direction Y.

The inner surface of the second wall 214 may be the surface of the second wall 214 facing the third wall 215, the inner surface of the third wall 215 may be the surface of the third wall 215 facing the second wall 214, and the inner surface of the second wall 214 and the inner surface of the third wall 215 are surfaces that constitute the internal space of the shell 21.

The coverage area of the first insulating coating layer on the inner surface of the second wall 214 may be located between the first wall 211 and the first end surface 2311 in the length direction Y of the main body part 231, or may cover the entire inner surface of the second wall 214.

The coverage area of the second insulating coating layer on the inner surface of the third wall 215 may be located between the first wall 211 and the first end surface 2311 in the length direction Y of the main body part 231, or may cover the entire inner surface of the third wall 215.

In the above solution, the first insulating member 24 is the first insulating coating layer applied to the inner surface of the second wall 214, and the second insulating member 25 is the second insulating coating layer applied to the inner surface of the third wall 215, such that the operation is simple, and the processing difficulty is low.

According to some embodiments of the present application, the first insulating coating layer and the second insulating coating layer both include at least one of polyester resin, polyurethane, and epoxy resin.

In the above solution, by using at least one of the polyester resin, the polyurethane, and the epoxy resin, a relatively good insulating effect is achieved.

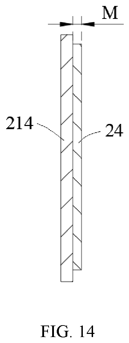

Referring to FIG. 14, FIG. 14 is a schematic assembly diagram of a second wall and a first insulating member according to some embodiments of the present application. According to some embodiments of the present application, a thickness of the first insulating coating layer and a thickness of the second insulating coating layer are both M, satisfying 0.005 mm ≤ M ≤ 0.2 mm.

The thickness of the first insulating coating layer may be the same as the thickness of the second insulating coating layer, so as to facilitate processing and manufacturing.

In the above solution, since the thickness of the first insulating coating layer and the thickness of the second insulating coating layer satisfy the above relationship (0.005 mm ≤ M ≤ 0.2 mm), a relatively good insulating effect is achieved, while also saving material and occupying less space.

Optionally, M may be 0.005 mm, 0.01 mm, 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, etc.

According to some embodiments of the present application, 0.01 mm ≤ M ≤ 0.1 mm.

Optionally, M may be 0.01 mm, 0.015 mm, 0.02 mm, 0.025 mm, 0.03 mm, 0.035 mm, 0.04 mm, 0.045 mm, 0.05 mm, 0.055 mm, 0.06 mm, 0.065 mm, 0.07 mm, 0.075 mm, 0.08 mm, 0.085 mm, 0.09 mm, 0.095 mm, 0.1 mm, etc.

In the above solution, since the thickness of the first insulating coating layer and the thickness of the second insulating coating layer satisfy the above relationship (0.01 mm ≤ M ≤ 0.1 mm), in the case of having a relatively good insulating effect, relatively less material is used, and the occupied space is relatively small.

Referring to FIGs. 3 and 6, according to some embodiments of the present application, the shell 21 includes an end cover 213 and a shell body 212, the shell body 212 includes a bottom wall 2121 and a plurality of side walls 2122, and the plurality of side walls 2122 are disposed in an enclosing manner at the edge of the bottom wall 2121. In the thickness direction X of the main body part 231, one end of each of the plurality of side walls 2122 is connected to the bottom wall 2121, the other end of each of the plurality of side walls 2122 defines an opening in an enclosing manner, and the end cover 213 closes the opening. The first wall 211 is one side wall 2122 of the plurality of side walls 2122.

The bottom wall 2121 and the plurality of side walls 2122 may be integrally formed.

The end cover 213 and the bottom wall 2121 are disposed opposite to each other in the thickness direction X of the main body part 231.

In the embodiments in which the shell 21 includes the second wall 214 and the third wall 215, the end cover 213 may be the second wall 214, and the bottom wall 2121 may be the third wall 215.

In the above solution, the first wall 211 is one side wall 2122, facilitating the electrical connection between the first electrode terminal 22 and an external component.

According to some embodiments of the present application, the area of the outer surface of the bottom wall 2121 is greater than the area of the outer surface of any one of the side walls 2122.

In the above solution, the bottom wall 2121 and the end cover 213 may be a large surface (a wall with a relatively large area) of the battery cell 20, facilitating the stacking of a plurality of battery cells 20 in the direction perpendicular to the bottom wall 2121, thereby reducing space occupation.

According to some embodiments of the present application, the first tab 232 is disposed on the first end surface 2311, the first tab 232 is electrically connected to the first electrode terminal 22 disposed on the first wall 211, and the first tab 232 is a bent structure. In the thickness direction of the first wall 211, the space between the first wall 211 and the first end surface 2311 is used for accommodating the bent first tab 232. The thickness direction of the first wall 211 is parallel to the length direction Y of the main body part 231. In the length direction Y of the main body part 231, the distance between the first wall 211 and the first end surface 2311 is H, satisfying 0.5 mm ≤ H ≤ 7 mm, so as to accommodate the bent first tab 232 while occupying a relatively small space in the length direction Y of the main body part 231.

Optionally, H may be 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, etc.

Optionally, 1 mm ≤ H ≤ 4 mm.

Referring to FIGs. 3 and 6, according to some embodiments of the present application, the electrode assembly 23 further includes a second tab 233 having a polarity opposite to that of the first tab 232. The second tab 233 and the first tab 232 are located at the same end of the main body part 231 in the length direction Y, and the second tab 233 is electrically connected to the first wall 211.

Optionally, the second tab 233 may be a negative electrode tab, and the first tab 232 may be a positive electrode tab.

In the above solution, the second tab 233 is electrically connected to the first wall 211, such that the components can be reduced, thereby reducing costs.

Referring to FIGs. 9 and 11, according to some embodiments of the present application, the electrode assembly 23 further includes the second tab 233 having a polarity opposite to that of the first tab 232, the second tab 233 and the first tab 232 are located at the same end of the main body part 231 in the length direction Y, and in the thickness direction X of the main body part 231, the second tab 233 is located between the first insulating member 24 and the second insulating member 25. The battery cell 20 further includes a second electrode terminal 28, the second electrode terminal 28 is disposed on the first wall 211 in an insulated manner, and the second electrode terminal 28 is electrically connected to the second tab 233.

According to some embodiments of the present application, the embodiments of present application further provide a battery 100. The battery 100 includes the battery cell 20 according to any one of the above embodiments.

According to some embodiments of the present application, the embodiments of the present application further provide an electric device. The electric device includes the battery cell 20 or the battery 100 according to any one of the above embodiments, and the battery cell 20 or the battery 100 is configured to provide electric energy.

Referring to FIGs. 3 to 13, according to some embodiments of the present application, the embodiments of the present application provide a battery cell 20. The battery cell 20 includes a shell 21, a first electrode terminal 22, an electrode assembly 23, a first insulating member 24, and a second insulating member 25.

The shell 21 includes a first wall 211, and the first electrode terminal 22 is disposed on the first wall 211 in an insulated manner.

The electrode assembly 23 is disposed in the shell 21, the electrode assembly 23 includes a main body part 231, a first tab 232, and a second tab 233, the main body part 231 is of a flat shape, the main body part 231 has a first end surface 2311 facing the first wall 211, the first tab 232 is a positive electrode tab, the second tab 233 is a negative electrode tab, the first tab 232 and the second tab 233 are disposed on the first end surface 2311, and the first tab 232 is electrically connected to the first electrode terminal 22.

The shell 21 includes an end cover 213 and a shell body 212, the shell body 212 includes a bottom wall 2121 and a plurality of side walls 2122, and the plurality of side walls 2122 are disposed in an enclosing manner at the edge of the bottom wall 2121. In the thickness direction X of the main body part 231, one end of each of the plurality of side walls 2122 is connected to the bottom wall 2121, the other end of each of the plurality of side walls 2122 defines an opening in an enclosing manner, and the end cover 213 closes the opening. The end cover 213 is the second wall 214, and the bottom wall 2121 is the third wall 215.

The first insulating member 24 and the second insulating member 25 are disposed in the shell 21, and in the thickness direction X of the main body part 231, the first tab 232 is located between the first insulating member 24 and the second insulating member 25. The orthographic projection of the first tab 232 in the thickness direction X of the main body part 231 falls within the orthographic projection of the first insulating member 24 in the thickness direction X of the main body part 231, and the orthographic projection of the first tab 232 in the thickness direction X of the main body part 231 falls within the orthographic projection of the second insulating member 25 in the thickness direction X of the main body part 231.

In some embodiments, the first insulating member 24 is disposed between the first wall 211 and the first end surface 2311, the first insulating member 24 is in contact with both the first wall 211 and the first end surface 2311, and the first insulating member 24 includes a body 241 and a protruding part 242. In the thickness direction X of the main body part 231, the first tab 232 is located between the body 241 and the second insulating member 25, the body 241 has a first surface 241a facing the second insulating member 25, and the protruding part 242 is connected to the body 241 and protrudes from the first surface 241a. The first tab 232 is located at one end of the main body part 231 in the length direction Y, the body 241 extends in the width direction Z of the main body part 231, a plurality of protruding parts 242 are provided, the plurality of protruding parts 242 are spaced apart from each other in the width direction Z of the main body part 231, and in the width direction Z of the main body part 231, the first tab 232 is located between two adjacent protruding parts 242. In the width direction Z of the main body part 231, the orthographic projection of the first tab 232 falls within the orthographic projection of the protruding part 242. The second insulating member 25 includes a first portion 251 and a second portion 252 connected to each other. In the thickness direction X of the main body part 231, the first tab 232 is located between the first portion 251 and the first insulating member 24, and in the length direction Y of the main body part 231, the second portion 252 is disposed between the first wall 211 and the first tab 232. The second portion 252 is in contact with the first surface 241a.

In some embodiments, the first insulating member 24 is a first insulating layer disposed on the inner surface of the end cover 213, and the first insulating layer is adhesively connected and fixed to the end cover 213; the second insulating member 25 is a second insulating layer disposed on the inner surface of the bottom wall 2121, and the second insulating layer is adhesively connected and fixed to the bottom wall 2121. The first insulating member 24 and the second insulating member 25 may be insulating patches.

In some embodiments, the first insulating member 24 is a first insulating coating layer applied to the inner surface of the end cover 213, and the second insulating member 25 is a second insulating coating layer applied to the inner surface of the bottom wall 2121. The first insulating coating layer and the second insulating coating layer both include at least one of polyester resin, polyurethane, and epoxy resin.

In some embodiments, the second tab 233 is electrically connected to the first wall 211.

In some embodiments, the battery cell 20 further includes a second electrode terminal, the second electrode terminal is disposed on the first wall 211 in an insulated manner, and the second electrode terminal is electrically connected to the second tab 233.

According to the battery cell 20 of the embodiments of the present application, by providing the first insulating member 24 and the second insulating member 25 in the shell 21, the orthographic projection of the first tab 232 in the thickness direction X of the main body part 231 falls within the orthographic projection of the first insulating member 24 in the thickness direction X of the main body part 231, and the orthographic projection of the first tab 232 in the thickness direction X of the main body part 231 falls within the orthographic projection of the second insulating member 25 in the thickness direction X of the main body part 231. The first insulating member 24 and the second insulating member 25 can insulate and isolate the first tab 232 from the shell 21 in the thickness direction X of the main body part 231, thereby reducing the risk of a short circuit caused by contact between the first tab 232 and the shell 21. As a result, the battery cell 20 has relatively high reliability.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a shell, comprising a first wall;
a first electrode terminal, disposed on the first wall in an insulated manner;
an electrode assembly, disposed in the shell, wherein the electrode assembly comprises a main body part and a first tab, the main body part is of a flat shape, the main body part has a first end surface facing the first wall, the first tab is disposed on the first end surface, and the first tab is electrically connected to the first electrode terminal; and
a first insulating member and a second insulating member, disposed in the shell, wherein in a thickness direction of the main body part, the first tab is located between the first insulating member and the second insulating member.

2. The battery cell according to claim 1, wherein an orthographic projection of the first tab in the thickness direction of the main body part falls within an orthographic projection of the first insulating member in the thickness direction of the main body part, and the orthographic projection of the first tab in the thickness direction of the main body part falls within an orthographic projection of the second insulating member in the thickness direction the main body part.

3. The battery cell according to claim 1 or 2, wherein the first insulating member is disposed between the first wall and the first end surface.

4. The battery cell according to claim 3, wherein the first insulating member is in contact with both the first wall and the first end surface.

5. The battery cell according to any one of claims 1-4, wherein the first insulating member comprises a body and a protruding part, in the thickness direction of the main body part, the first tab is located between the body and the second insulating member, the body has a first surface facing the second insulating member, and the protruding part is connected to the body and protrudes from the first surface.

6. The battery cell according to claim 5, wherein the first tab is located at one end of the main body part in a length direction, the body extends in a width direction of the main body part, a plurality of the protruding parts are provided, the plurality of protruding parts are spaced apart from each other in the width direction of the main body part, and in the width direction of the main body part, the first tab is located between two adjacent protruding parts.

7. The battery cell according to claim 6, wherein in the width direction of the main body part, an orthographic projection of the first tab falls within an orthographic projection of the protruding part.

8. The battery cell according to claim 6 or 7, wherein the body, the two adjacent protruding parts, and the second insulating member define an accommodating space for accommodating the first tab.

9. The battery cell according to any one of claims 6-8, wherein the electrode assembly further comprises a second tab having a polarity opposite to that of the first tab, the second tab and the first tab are located at a same end of the main body part in the length direction, and in the width direction of the main body part, the second tab is located between two adjacent protruding parts.

10. The battery cell according to claim 9, wherein the plurality of protruding parts comprise a first protruding part, a second protruding part, and a third protruding part, in the width direction of the main body part, the first protruding part and the second protruding part are respectively located at two opposite ends of the body, the third protruding part is located between the first protruding part and the second protruding part, the first tab is located between the first protruding part and the third protruding part, and the second tab is located between the second protruding part and the third protruding part.

11. The battery cell according to claim 10, wherein the first wall is provided with a liquid injection hole, the third protruding part is provided with a clearance part, and in the length direction of the main body part, the clearance part and the liquid injection hole at least partially overlap.

12. The battery cell according to any one of claims 5-11, wherein the body further has a second surface facing away from the second insulating member, in the thickness direction of the main body part, a distance between the second surface and the first surface is W₀, and a maximum distance between the protruding part and the first surface is W₁, satisfying W₁ > W₀.

13. The battery cell according to claim 12, wherein a wall thickness of the shell is W₂, in the thickness direction of the main body part, a dimension of the battery cell is W, and a maximum distance between the protruding part and the second surface is W₃, satisfying 2W₂ ≤ W - W₃ ≤ W/10.

14. The battery cell according to any one of claims 1-13, wherein the second insulating member comprises a first portion and a second portion connected to each other, and in the thickness direction of the main body part, the first tab is located between the first portion and the first insulating member; the first tab is located at one end of the main body part in the length direction, and in the length direction of the main body part, the second portion is disposed between the first wall and the first tab.

15. The battery cell according to claim 14, wherein the battery cell further comprises a first adapter member, the first adapter member is connected to the first tab, in the length direction of the main body part, the second portion is disposed between the first adapter member and the first wall, and the first electrode terminal penetrates through the second portion to be electrically connected to the first adapter member.

16. The battery cell according to claim 14 or 15, wherein in the thickness direction of the main body part, the second portion is in contact with the first insulating member.

17. The battery cell according to claim 16, wherein the first insulating member comprises the body and the protruding part, the body comprises the first surface facing the second insulating member and the second surface facing away from the second insulating member, the protruding part protrudes from the first surface, and the second portion is in contact with the first surface.

18. The battery cell according to claim 17, wherein in the thickness direction of the main body part, the distance between the second surface and the first surface is W₀, satisfying 0.05 mm ≤ W₀ ≤ 1 mm.

19. The battery cell according to claim 18, wherein 0.2 mm ≤ W₀ ≤ 0.6 mm.

20. The battery cell according to any one of claims 1-19, wherein the shell further comprises a second wall and a third wall, the second wall and the third wall are disposed opposite to each other in the thickness direction of the main body part, the first insulating member is a first insulating layer disposed on an inner surface of the second wall, and the second insulating member is a second insulating layer disposed on an inner surface of the third wall.

21. The battery cell according to claim 20, wherein the first insulating layer is adhesively connected and fixed to the second wall, and the second insulating layer is adhesively connected and fixed to the third wall.

22. The battery cell according to any one of claims 1-21, wherein the shell further comprises the second wall and the third wall, the second wall and the third wall are disposed opposite to each other in the thickness direction of the main body part, the first insulating member is a first insulating coating layer applied to the inner surface of the second wall, and the second insulating member is a second insulating coating layer applied to the inner surface of the third wall.

23. The battery cell according to claim 22, wherein the first insulating coating layer and the second insulating coating layer both comprise at least one of polyester resin, polyurethane, and epoxy resin.

24. The battery cell according to claim 22 or 23, wherein a thickness of the first insulating coating layer and a thickness of the second insulating coating layer are both M, satisfying 0.005 mm ≤ M ≤ 0.2 mm.

25. The battery cell according to claim 24, wherein 0.01 mm ≤ M ≤ 0.1 mm.

26. The battery cell according to any one of claims 1-25, wherein the shell comprises an end cover and a shell body, the shell body comprises a bottom wall and a plurality of side walls, the plurality of side walls are disposed in an enclosing manner at an edge of the bottom wall, in the thickness direction of the main body part, one end of each of the plurality of side walls is connected to the bottom wall, the other end of each of the plurality of side walls defines an opening in an enclosing manner, and the end cover closes the opening;
the first wall is one side wall of the plurality of side walls.

27. The battery cell according to claim 26, wherein an area of an outer surface of the bottom wall is greater than an area of an outer surface of any one of the side walls.

28. The battery cell according to any one of claims 1-27, wherein the electrode assembly further comprises the second tab having a polarity opposite to that of the first tab, the second tab and the first tab are located at the same end of the main body part in the length direction, and the second tab is electrically connected to the first wall.

29. A battery, comprising the battery cell according to any one of claims 1-28.

30. An electric device, comprising the battery cell according to any one of claims 1-28 or the battery according to claim 29, wherein the battery cell or the battery is configured to provide electric energy.
